# EUROPEAN PATENT SPECIFICATION

(11) **EP 2 713 419 B1**
(45) Date of publication and mention of the grant of the patent: **12.11.2014**
(21) Application number: 13186100.7
(22) Date of filing: 26.09.2013
(51) Int. Cl.: H01M 2/12

(54) **Lid for electric accumulators**
Deckel für elektrische Akkumulatoren
Couvercle pour accumulateur électrique

(30) Priority: 26.09.2012 IT VI20120238
(43) Date of publication of application: 02.04.2014
(73) Proprietor: Biasin SRL, 36045 Madonna di Lonigo (VI) (IT)
(72) Inventor: BIASIN, Renato, 36050 MONTORSO VICENTINO (VI) (IT)
(74) Representative: Bonini, Ercole

(56) References cited:
- EP-A1- 0 503 264
- EP-A1- 0 570 703
- EP-A2- 1 280 214
- EP-A2- 1 341 244
- US-A- 5 843 593

## Description

The present invention concerns a lid for electric accumulators used in motor vehicles.

It is known that in accumulators, especially in lead accumulators, during operation and/or during recharge gases are produced that must be discharged towards the outside, as otherwise they would cause the accumulator to swell and even to break.

For this purpose, lids are provided with caps with breather or breather channels that connect the accumulator top up holes present in the lid with one another and place them in communication with the external environment through outlet holes.

In order to prevent possible backfires from causing the exhaust gases and consequently the accumulator to explode, two flame arrestors are inserted in the lid before the gases are discharged towards the outside.

In order to allow the gases produced inside the accumulator to flow out and at the same time prevent the electrolyte from flowing out, labyrinths have been conceived that help convey the gases towards the discharge channels.

Here below the word "labyrinth" will mean a device formed by a plurality of walls spaced from one another, each pair of said walls defining a sector. The entirety of the sectors defined by said walls defines a closed space portion.

These labyrinths are formed on the outside of the accumulator lid and are generally welded onto the lid itself.

For example, EP 0 503 264 describes an accumulator battery having a fluid electrolyte and a labyrinth which is common to all the cell containers.

EP 0 570 703 describes an accumulator having a monoblock cover of the double-cover type.

US 5,843,593 describes a leak resistant battery cover for storage batteries.

EP 1 341 244 describes an accumulator, in particular a lead accumulator, with a housing block cover comprising a lower cover and an upper lid between which a gas space is formed for acid separation.

EP 1 280 214 describes a leak resistant automotive battery comprising a housing containing cells with filling plugs and a cover sealed to an opened top end of the housing.

The labyrinths of the known type for the lids of electric accumulators, however, pose some drawbacks.

In fact, when the labyrinths currently available on the market are welded on the outside of the accumulator lid, they create spaces that are difficult to clean. The dirt produced during the recharge operation must successively be removed by washing the accumulator, in such a way as to eliminate the electrolyte residues present thereon.

As sulphuric acid is hygroscopic (meaning that it has the ability to attract water), if traces of sulphuric acid are left, these attract external humidity and the acid traces expand.

Furthermore, the sulphuric acid that expanded outside the accumulator may even damage some components of the car's engine.

The object of the present invention is to eliminate the above mentioned drawbacks.

In particular, it is the object of the present invention to provide a lid for electric accumulators that is equipped with one or more labyrinths and that avoids the outflow of the electrolyte contained therein when the accumulator is overturned in any position.

It is a further object of the present invention to provide a lid for electric accumulators that is equipped with one or more labyrinths and avoids the problems related to the accumulator washing operation.

The said objects are achieved by the present invention concerning a lid for electric accumulators containing an electrolyte, whose main characteristics are in accordance with the contents of the main claim.

Further characteristics of the invention are the subject of the dependent claims. Advantageously, the lid according to the invention prevents the outflow of the electrolyte contained therein when the accumulator is overturned.

Still advantageously, the lid according to the invention is internally provided with one or more labyrinths comprising a first pressed portion in which the inner surface of the shaped closing element is obtained and a second portion obtained in an external shaped body that is pressed separately from the lid, the first and the second portion of the labyrinths having matching profiles suited to be tightly coupled with each other.

Since the shaped bodies that are external to the lid have the same size, they are modular and therefore they can be applied to electric accumulators having various sizes.

Again advantageously, each labyrinth comprises a plurality of sectors that communicate with one another through a plurality of staggered slits in such a way as to release the gases that flow out of the container of the accumulator and to hold the electrolyte and limit its diffusion inside the lid, making its outflow from the accumulator difficult.

Advantageously to the same extent, said staggered slits of the labyrinths make the diffusion of the air that flows into the lid from the outside more difficult. The objects and advantages described above will be highlighted in greater detail in the following description that is provided as an indicative, non-limiting example with reference to the enclosed drawings, wherein:
- Figure 1 shows an axonometric view from below of the lid according to the invention;
- Figure 2 shows an axonometric view of a detail of the lid shown in Figure 1;
- Figure 3 shows a view from below of the lid of Figure 1;
- Figure 4 shows an axonometric view from below of a plurality of external shaped bodies suited to be coupled with the lid of Figure 1;
- Figure 5 shows an axonometric view of the shaped bodies of Figure 3 coupled with the lid of Figure 1;
- Figure 6 shows an axonometric view of the lid of Figure 1 mounted on the container of an electric accumulator.

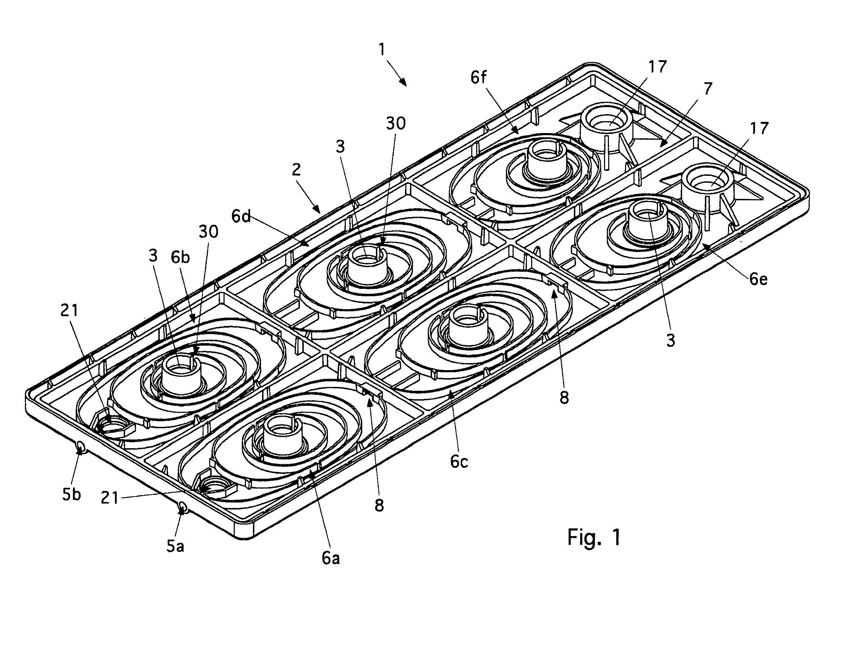

With reference to Figure 1, the lid according to the invention, indicated as a whole by **1,** comprises:
- a shaped closing element **2,** suited to be coupled with the container **16** of an accumulator **A** and in which it is possible to identify several holes **3** spaced from one another, each one of which is suited to accommodate a cap for the introduction of the electrolyte in the container **16;**
- two discharge holes, respectively **5a** and **5b,** obtained in the shaped closing
   element **2** to allow the outflow of the gas produced in the container **16.**

According to the present invention, the lid **1** comprises a plurality of first labyrinth portions **6a, 6b, 6c, 6d, 6e, 6f** obtained in the internal surface **7** of the shaped closing element **2,** each one of which develops around one of the holes **3** and is provided with at least one through hole **8** in communication with a discharge hole **5a, 5b** or with a first labyrinth portion adjacent to it.

Always with reference to Figure 1, the holes **3** are all provided with a slit **30** that develops in a substantially perpendicular direction with respect to the internal surface **7** of the shaped closing element **2.**

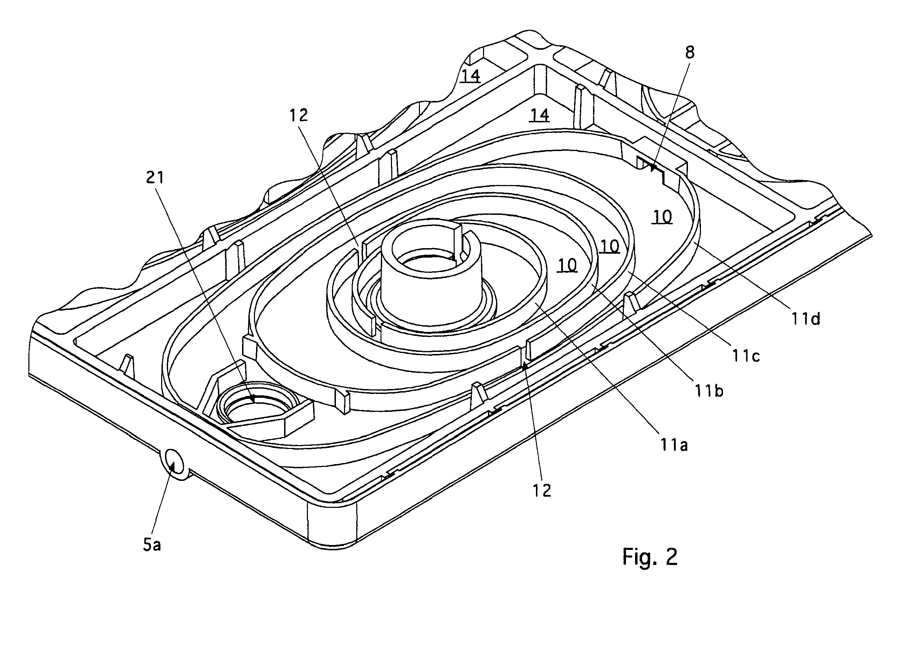

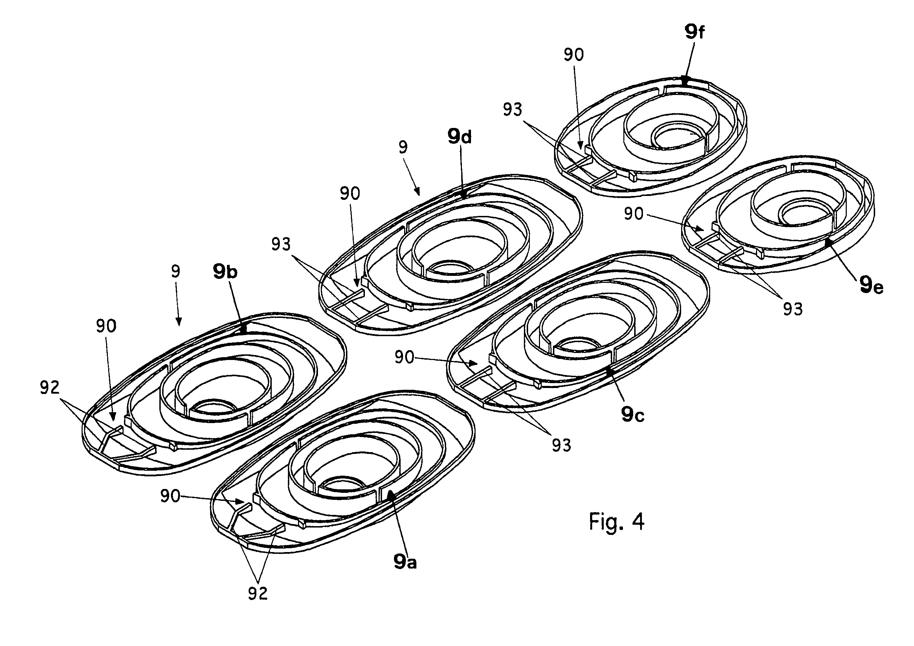

In particular, and with reference to Figures 2 and 4, the lid **1** is provided with labyrinths, each one of which comprises the first labyrinth portion **6a, 6b, 6c, 6d, 6e, 6f,** obtained in the internal surface **7** of the shaped closing element **2,** and a second labyrinth portion **9a, 9b, 9c, 9d, 9e, 9f,** obtained in each shaped body **9** that is external to the lid **1.**

The first and the second labyrinth portions, respectively **6a, 6b, 6c, 6d, 6e, 6f** on one side, and **9a, 9b, 9c, 9d, 9e, 9f** on the other side, have matching profiles that are suited to be tightly coupled with each other.

The coupling of the first and second labyrinth portions can be obtained by pressure or by welding and produces the individual labyrinths.

As an alternative to the coupling by pressure, the two labyrinth portions can be fixed to each other via fixing means like hooks or similar items.

As can be observed in Figure 2, the labyrinths develop around each one of the holes and are divided into sectors **10,** wherein each sector **10** is delimited by walls **11a, 11b, 11c** and communicates with the adjacent sector through a slit or hole **12.** The wall **11d** communicates with the wall **11d** of the adjacent labyrinth through the hole **8.**

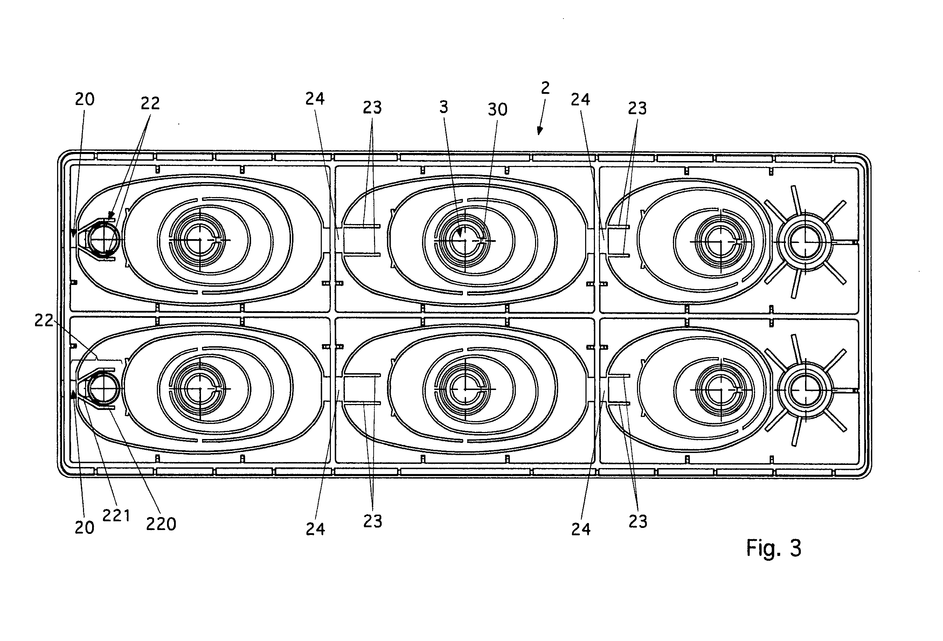

In particular, and with reference to Figures 1 and 3, the first labyrinth portions **6a, 6c, 6e** communicate with one another via through holes **8** that develop inside ducts **24,** each one of which places two adjacent first labyrinth portions in communication with each other.

The same applies to the first labyrinth portions **6b, 6d, 6f.**

In particular, the slits or holes **12** mentioned above are present both in the first portion and in the second portion making up each labyrinth and, as shown in Figures 2 and 4, are staggered both in the first and in the second portion of each labyrinth.

As shown in Figure 2, the slits or holes **12** of the first and of the second labyrinth portions, respectively **6a, 6b, 6c, 6d, 6e, 6f** and **9a, 9b, 9c, 9d, 9e, 9f,** are staggered, first of all in order to make it more difficult for the electrolyte to flow along the route defined inside the sectors **10** of the labyrinths and out through the discharge holes **5a, 5b** present in the lid **1.**

Secondly, the staggered position of the slits or holes **12** in the walls **11a, 11b, 11c** of the labyrinths serves as a barrier that opposes the incoming air flow from the external environment.

In this way, the incoming air, even if it should flow through the slit or hole **12** in the outermost wall **11c** of one of the labyrinths, finds an obstacle that is represented by the innermost wall **11b,** as the slit or hole **12** in the wall **11b** is not aligned with the corresponding slit or hole **12** present in the outermost wall **11c.**

The coupling between the first labyrinth portions **6a, 6b, 6c, 6d, 6e, 6f,** belonging to the internal surface **7** of the shaped closing element **2,** and the second labyrinth portions **9a, 9b, 9c, 9d, 9e, 9f,** belonging to the internal surface **90** of each external shaped body **9,** creates the complete labyrinths through a tight coupling.

In this coupling, the walls **11a, 11b, 11c** that divide the sectors **10** are arranged spaced from one another in such a way as to define ducts (not visible in the figures) through which the gas flowing out of the accumulator **A** is diffused.

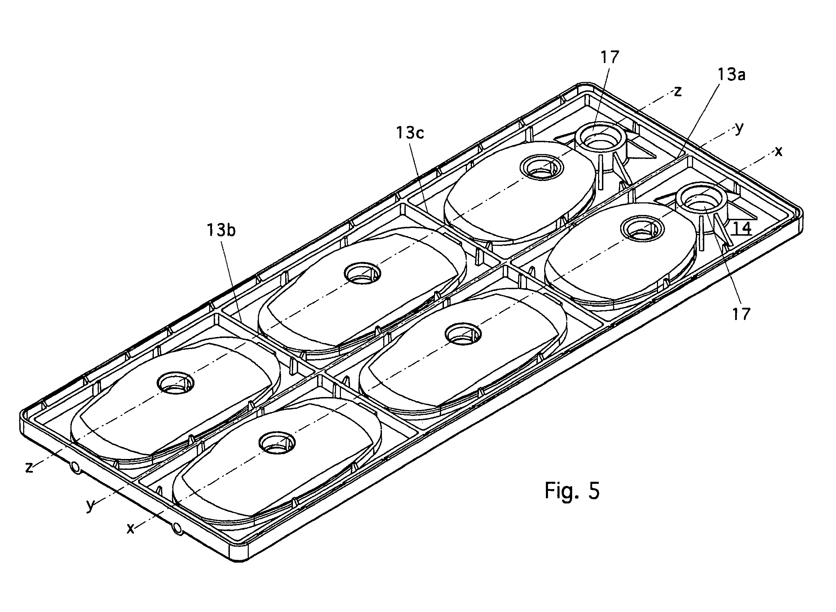

In particular, it can be observed in Figure 5 that the shaped closing element **2** of the lid **1** is provided in its internal surface **7** with partitions, respectively **13a, 13b** and **13c,** that are orthogonal to each other and each of which is suited to define a chamber **14** inside which the first labyrinth portion **6a, 6b, 6c, 6d, 6e, 6f** is housed.

The partitions are three: the partition **13a** is parallel to and coincides with the longitudinal axis of symmetry **Y** of the lid **1,** while the partitions **13b** and **13c** are orthogonal to the partition **13a.**

In the present embodiment the partitions **13a, 13b** and **13c** define six chambers **14** having the same size; however, according to a variant embodiment of the invention not represented in the figures, the partitions can be present in a different number and may not cross each other in the middle, thus defining chambers in different sizes.

Each one of the partitions **13b** and **13c,** orthogonal to the longitudinal axis **Y** of the shaped closing element **2,** is provided with two through holes **8,** one of which can be seen in Figure 2, which place two adjacent chambers **14** in communication with the corresponding labyrinths.

Regarding the first labyrinth portions **6a** and **6b,** they are both provided at one end with a through hole **8** in communication with the partition **13b** and at the opposite end with a discharge duct **20.** The discharge duct **20** is in communication with the discharge holes **5a, 5b,** which allow the gas to flow out towards the outside.

With reference to Figures 1 and 3, the first labyrinth portions **6a** and **6b** are both provided with a flame arrestor **21** in order to prevent any backfires.

As can be observed in Figure 3, each flame arrestor **21** communicates with the discharge ducts **20** and is housed inside an area delimited by two shaped fillets **22** that comprise a first section **220** with a second section **221** departing therefrom, said second section being incident on the first section **220.**

The other fillets **23** that project from the corresponding first labyrinth portions **6c, 6d, 6e, 6f** serve an analogous function.

The fillets **22** and **23** are coupled with the matching profile of fillets **92** and **93** belonging to each shaped body **9** external to the shaped closing element **2** and said coupling advantageously creates a chamber (not visible in the figures) that serves as a barrier against the diffusion of the electrolyte inside the lid **1** when the accumulator **A** is accidentally overturned.

As can be observed in Figure 5, the first labyrinth portions **6a, 6c, 6e** are symmetrical with respect to an axis of symmetry **X** parallel to and spaced from the longitudinal axis of symmetry **Y** of the shaped closing element **2.**

It can be observed that the axis **X** passes through the through holes **8** of the first labyrinth portions **6a, 6c, 6e** and through the centre of the holes **3** of the shaped closing element **2.** Analogously, there is also an axis of symmetry **Z,** parallel to and spaced from the axis **X,** which passes through the through holes **8** of the first labyrinth portions **6b, 6d, 6f** and through the centre **3** of the shaped closing element **2.**

It can be observed that in the present embodiment of the invention the axes **X** and **Z** are specular with respect to the axis **Y.**

It can furthermore be observed in Figure 3 that the fillets **23** mentioned above develop according to a direction that is substantially parallel to that of the axes **X, Y** and **Z.**

The lid **1** is furthermore provided with two through holes **17** for the introduction of the positive pole and the negative pole of the electric accumulator **A,** visible in Figure 5.

As can be clearly seen in Figure 5, the shaped bodies **9,** which are provided with the second labyrinth portions **9a, 9b, 9c, 9d** coupled with the corresponding first labyrinth portions **6a, 6b, 6c, 6d** to form the labyrinths, have the same size and are therefore modular.

The other shaped bodies **9** that are coupled with the corresponding first labyrinth portions **6e, 6f** are slightly smaller than the other shaped bodies **9.** However, according to a variant embodiment of the invention not illustrated in the figures, the shaped bodies **9** may all have the same size, so that they are perfectly modular.

In this way, the second labyrinth portions **9a, 9b, 9c, 9d, 9e, 9f,** belonging to the surfaces **90** of the shaped bodies **9,** can be tightly coupled with any first labyrinth portion **6a, 6b, 6c, 6d, 6e, 6f.**

Consequently, to advantage, there is perfect modularity of the external shaped bodies **9** in the coupling with the first labyrinth portions **6a, 6b, 6c, 6d, 6e, 6f.** This makes the external shaped bodies **9** suited to be coupled with shaped closing elements **2** having different sizes and, consequently, suited to be applied to electric accumulators having various sizes.

In practice, the preparation of the lid according to the invention takes place as follows.

The first step includes the making, through a pressing process, of the lid **1** complete with poles and with the first labyrinth portion **6a, 6b, 6c, 6d, 6e, 6f,** respectively obtained in the internal surface **7** of the shaped closing element **2.** The external shaped body **9** with the second labyrinth portions **9a, 9b, 9c, 9d, 9e, 9f** is pressed separately.

Successively, each shaped body **9** external to the lid **1** is coupled with each first labyrinth portion **6a, 6b, 6c, 6d, 6e, 6f** and sealed onto it.

The tightness of the coupling is obtained thanks to the fact that the first labyrinth portions **6a, 6b, 6c, 6d, 6e, 6f** have profiles that match those of the second labyrinth portions **9a, 9b, 9c, 9d, 9e, 9f** obtained in the shaped bodies **9** external to the lid **1.**

Successively, the components and the positive and negative poles are inserted in the electric accumulator **A.**

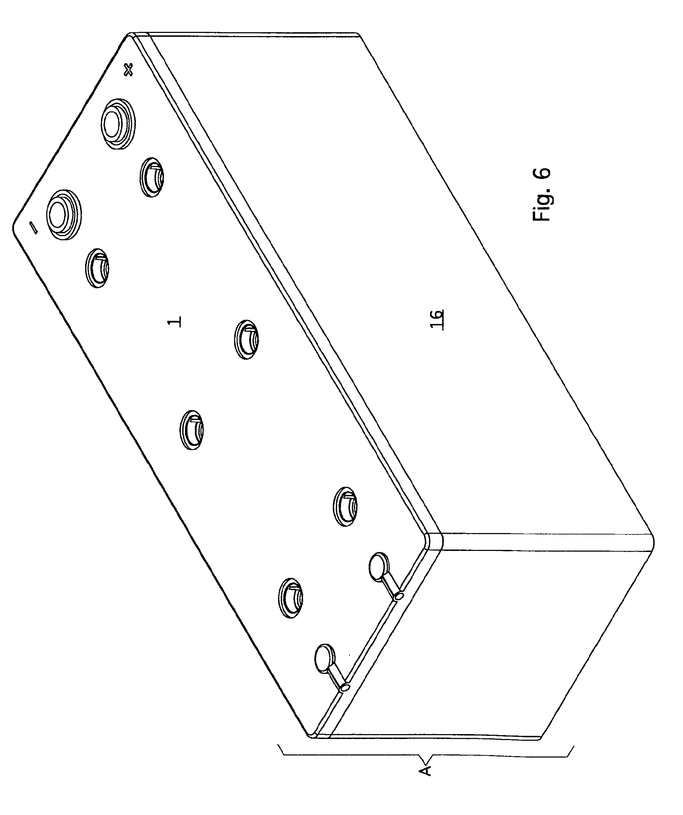

Finally, the lid **1** is coupled with the container **16** of the electric accumulator **A,** and then sealed onto the latter, thus obtaining the accumulator **A** visible in Figure 6.

Successively the electrolytic solution is introduced in the accumulator **A** through the holes **3** and finally the caps are installed.

As can be understood from the description provided above, the lid according to the invention achieves all the set objects.

In particular, the lid according to the invention allows the accumulator to be overturned in any position and, thanks to the presence of the labyrinths, prevents any outflow of electrolyte from the holes from causing damage on the outside of the electric accumulator itself.

Furthermore, as the welds are all made inside the accumulator, there are no welding points on the accumulator lid.

For this reason, the lid according to the invention overcomes the problems related to the washing of the accumulator, as the labyrinths are inside the accumulator and no more outside it, as in the past.

In the construction stage, the lid according to the invention can be subjected to modifications that must all be considered protected by the present patent, provided that they fall within the scope of the following claims.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Lid (1) for an electric accumulator (A) containing an electrolyte, said lid (1) comprising:
- a shaped closing element (2), suited to be coupled with the container (16) of said accumulator (A) and in which it is possible to identify one or more holes (3) spaced from one another, each one of which is suited to accommodate a cap for the introduction of the electrolyte in said container (16);
- at least one discharge hole (5a, 5b) obtained in said shaped closing element (2) in order to allow the gas produced in said container (16) to flow out,
**characterized in that** it also comprises:
- first labyrinth portions (6a, 6b, 6c, 6d, 6e, 6f) obtained in the internal surface (7) of said shaped closing element (2), each one of which develops around one of said holes (3) and is provided with at least one through hole (8) in communication with at least one discharge hole (5a, 5b) or with a first labyrinth portion adjacent to it;
- second labyrinth portions (9a, 9b, 9c, 9d, 9e, 9f) obtained in shaped bodies (9), said second labyrinth portions (9a, 9b, 9c, 9d, 9e, 9f) having matching profiles configured to be tightly coupled with any first labyrinth portion (6a, 6b, 6c, 6d, 6e, 6f) in order to form more labyrinths once the coupling operation has been completed.

2. Lid (1) according to claim 1, **characterized in that** one or more of said first labyrinth portions (6a, 6b) is/are provided, at one end, with a flame arrestor (21) located inside an area delimited by two shaped fillets (22) and, at the opposite end, with a through hole (8) that places said first labyrinth portions (6a, 6b) in communication with a first labyrinth portion (6c, 6d) adjacent to them.

3. Lid (1) according to claim 1 or 2, **characterized in that** it comprises two shaped fillets (22, 23), each obtained in said first labyrinth portions (6a, 6b, 6c, 6d, 6e, 6f) and suited to be coupled with the matching profile of corresponding fillets (92, 93) belonging to each one of said shaped bodies (9), in order to forum a chamber suitable for preventing the diffusion of the electrolyte inside said lid (1).

4. Lid (1) according to any of the preceding claims, **characterized in that** one or more of said first labyrinth portions (6c, 6d) is/are provided with through holes (8) suited to place it/them in communication with two first labyrinth portions (6a, 6b, 6e, 6f) adjacent to it/them.

5. Lid (1) according to any of the preceding claims, **characterized in that** each one of said first labyrinth portions (6a, 6b, 6c, 6d, 6e, 6f) comprises a plurality of sectors (10) in communication with one another through a plurality of staggered slits or holes (12).

6. Lid (1) according to any of the preceding claims, **characterized in that** said first labyrinth portions (6a, 6b, 6c, 6d, 6e, 6f) are symmetrical with respect to a longitudinal axis (X, Z) passing through the centre of one or more of said holes (3), said longitudinal axis (X, Z) being substantially parallel to and spaced from the longitudinal axis (Y) of said shaped closing element (2).

7. Lid (1) according to any of the preceding claims, **characterized in that** said shaped closing element (2) is provided with one or more partitions (13a, 13b, 13c), each one of which is suited to define a chamber (14) inside which one of said first labyrinth portions is obtained.

8. Lid (1) according to claim 7, **characterized in that** one or more of said partitions (13b, 13c) is provided with a through hole (8) that places two adjacent chambers (14) in communication with each other.

9. Lid (1) according to claims 7 and 8, **characterized in that** the through holes (8) of said partitions (13b, 13c) place two through holes (8) belonging to two adjacent first labyrinth portions (6a, 6b, 6c, 6d, 6e, 6f) in communication with each other.

## Patentansprüche

1. Deckel (1) für eine elektrische, einen Elektrolyten enthaltende Sammlerbatterie (A), wobei der besagte Deckel (1) Folgendes umfasst:
- ein geformtes Verschlusselement (2), dazu geeignet, mit dem Behälter (16) der besagten Sammlerbatterie (A) gekuppelt zu werden, und in dem eine oder mehrere, voneinander distanzierte Bohrungen (3) identifizierbar sind, von denen jede geeignet ist, eine Kappe zum Einfüllen des Elektrolyten in den besagten Behälter (16) aufzunehmen;
- wenigstens eine in dem besagten, geformten Verschlusselement (2) herausgearbeitete Auslassöffnung (5a, 5b) für das Entweichen des sich in dem besagten Behälter (16) bildenden Gases,
**dadurch gekennzeichnet, dass** er des Weiteren Folgendes umfasst:
- erste, aus der Innenfläche (7) des besagten geformten Verschlusselements (2) herausgearbeitete Labyrinthabschnitte (6a, 6b, 6c, 6d, 6e, 6f), von denen jeder um eine der besagten Bohrungen (3) verläuft und wenigstens eine Durchgangsöffnung (8) umfasst, die mit wenigstens einer Auslassöffnung (5a, 5b) oder mit einem ersten, an ihn angrenzenden ersten Labyrinthabschnitt kommuniziert;
- zweite, aus geformten Körpern (9) herausgearbeitete Labyrinthabschnitte (9a, 9b, 9c, 9d, 9e, 9f), wobei die besagten zweiten Labyrinthabschnitte (9a, 9b, 9c, 9d, 9e, 9f) passende Profile aufweisen, die derart konfiguriert sind, dicht mit jeglichem ersten Labyrinthabschnitt (6a, 6b, 6c, 6d, 6e, 6f) gekuppelt zu werden, um nach Abschluss des Kupplungsvorgangs mehr Labyrinthe zu bilden.

2. Deckel (1) gemäß Patentanspruch 1, **dadurch gekennzeichnet, dass** ein oder mehrere der besagten ersten Labyrinthabschnitte (6a, 6b) an einem Ende mit einer innerhalb eines durch zwei geformte Leisten (22) begrenzten Bereichs positionierten Flammensperre (21) versehen ist/sind, und am entgegengesetzten Ende mit einer Durchgangsbohrung (8), die die besagten, ersten Labyrinthabschnitte (6a, 6b) mit einem an diese angrenzenden Labyrinthabschnitt (6c, 6d) in Kommunikation versetzt.

3. Deckel (1) gemäß Patentanspruch 1 oder 2, **dadurch gekennzeichnet, dass** er zwei geformte Leisten (22, 23) umfasst, die jeweils aus den besagten, ersten Labyrinthabschnitten (6a, 6b, 6c, 6d, 6e, 6f) herausgearbeitet und geeignet sind, mit dem passenden Profil entsprechender Leisten (92, 93) gekuppelt zu werden, die zu jedem der besagten, geformten Körper (9) gehören, um eine Kammer zu bilden, welche geeignet ist, die Ausbreitung des Elektrolyten in dem besagten Deckel (1) zu vermeiden.

4. Deckel (1) gemäß eines jeden der vorstehenden Patentansprüche, **dadurch gekennzeichnet, dass** ein oder mehrere der besagten, ersten Labyrinthabschnitte (6c, 6d) mit Durchgangsbohrungen (8) versehen ist/sind, die geeignet sind, ihn/sie mit zwei an ihn/sie angrenzende, erste Labyrinthabschnitte (6a, 6b, 6e, 6f) in Kommunikation zu versetzen.

5. Deckel (1) gemäß eines jeden der vorstehenden Patentansprüche, **dadurch gekennzeichnet, dass** jeder der besagten, ersten Labyrinthabschnitte (6a, 6b, 6c, 6d, 6e, 6f) eine Vielzahl Segmente (10) aufweist, die über eine Vielzahl versetzt angeordneter Schlitze oder Löcher (12) miteinander kommunizieren.

6. Deckel (1) gemäß eines jeden der vorstehenden Patentansprüche, **dadurch gekennzeichnet, dass** die besagten, ersten Labyrinthabschnitte (6a, 6b, 6c, 6d, 6e, 6f) zu einer durch den Mittelpunkt einer oder mehrerer Bohrungen (3) verlaufenden Längsachse (X, Z) symmetrisch sind, wobei die besagte Längsachse (X, Z) im Wesentlichen parallel zu und distanziert von der Längsachse (Y) des besagten, geformten Verschlusselements (2) ist.

7. Deckel (1) gemäß eines jeden der vorstehenden Patentansprüche, **dadurch gekennzeichnet, dass** das besagte, geformte Verschlusselement (2) eine oder mehrere Trennwände (13a, 13b, 13c) umfasst, von denen jede geeignet ist, eine Kammer (14) zu definieren, innerhalb derer einer der besagten, ersten Labyrinthabschnitte herausgearbeitet ist.

8. Deckel (1) gemäß Patentanspruch 7, **dadurch gekennzeichnet, dass** eine oder mehrere der besagten Trennwände (13b, 13c) mit einer Durchgangsbohrung (8) versehen ist, die zwei aneinander angrenzende Kammern (14) in Kommunikation versetzt.

9. Deckel (1) gemäß den Patentansprüchen 7 und 8, **dadurch gekennzeichnet, dass** die Durchgangsöffnungen (8) der besagten Trennwände (13b, 13c) zwei zu zwei aneinander angrenzenden, ersten Labyrinthabschnitten (6a, 6b, 6c, 6d, 6e, 6f) gehörige Durchgangsbohrungen (8) miteinander in Kommunikation versetzen.

## Revendications

1. Couvercle (1) pour un accumulateur électrique (A) contenant un électrolyte, ledit couvercle (1) comprenant:
- un élément de fermeture galbé (2) apte à se coupler avec le conteneur (16) dudit accumulateur (A) et où il est possible d'identifier un ou plusieurs trous (3) espacés entre eux, chacun desquels est apte à recevoir un bouchon pour l'introduction de l'électrolyte dans ledit conteneur (16);
- au moins un orifice d'évacuation (5a, 5b), obtenu dans ledit élément de fermeture (2), pour consentir la sortie du gaz qui s'est produit dans ledit conteneur (16),
**caractérisé en ce qu'**il comprend en outre:
- de premières portions de labyrinthe (6a, 6b, 6c, 6d, 6e, 6f) obtenues dans la surface interne (7) dudit élément de fermeture galbé (2), chacune desquelles se développe autour d'un desdits trous (3) et est dotée d'au moins un trou passant (8) en communication avec au moins un orifice d'évacuation (5a, 5b) ou avec une première portion de labyrinthe adjacente à celle-ci;
- de deuxièmes portions de labyrinthe (9a, 9b, 9c, 9d, 9e, 9f) obtenues dans des corps galbés (9), lesdites deuxièmes portions de labyrinthe (9a, 9b, 9c, 9d, 9e, 9f) ayant des profils qui correspondent entre eux configurés de manière à être couplés hermétiquement avec l'une quelconque des premières portions de labyrinthe (6a, 6b, 6c, 6d, 6e, 6f) de façon à former plusieurs labyrinthes une fois que l'opération de couplage a été complétée.

2. Couvercle (1) selon la revendication 1, **caractérisé en ce qu'**une ou plusieurs desdites premières portions de labyrinthe (6a, 6b) est/sont dotée/s, sur une extrémité, d'un arrête-flammes (21) logé à l'intérieur d'une zone délimitée par deux filets galbés (22) et, sur l'extrémité opposée, d'un trou passant (8) qui met en communication lesdites premières portions de labyrinthe (6a, 6b) avec une première portion de labyrinthe (6c, 6d) adjacente à celles-ci.

3. Couvercle (1) selon la revendication 1 ou 2, **caractérisé en ce qu'**il comprend deux filets galbés (22, 23), chacun obtenu dans lesdites premières portions de labyrinthe (6a, 6b, 6c, 6d, 6e, 6f) et aptes à se coupler avec le profil correspondant de filets correspondants (92, 93) appartenant à chacun desdits corps galbés (9), afin de former une chambre apte à empêcher la diffusion de l'électrolyte à l'intérieur dudit couvercle (1).

4. Couvercle (1) selon l'une quelconque des revendications précédentes, **caractérisé en ce qu'**une ou plusieurs desdites premières portions de labyrinthe (6c, 6d) est/sont dotée/s de trous passants (8) aptes à la/les mettre en communication avec deux premières portions de labyrinthe (6a, 6b, 6e, 6f) adjacente/s à celle-ci/celles-ci.

5. Couvercle (1) selon l'une quelconque des revendications précédentes, **caractérisé en ce que** chacune desdites premières portions de labyrinthe (6a, 6b, 6c, 6d, 6e, 6f) comprend une pluralité de secteurs (10) en communication entre eux au moyen d'une pluralité de fentes ou trous (12) décalés entre eux.

6. Couvercle (1) selon l'une quelconque des revendications précédentes, **caractérisé en ce que** lesdites premières portions de labyrinthe (6a, 6b, 6c, 6d, 6e, 6f) sont symétriques par rapport à un axe longitudinal (X, Z) passant par le centre d'un ou plusieurs desdits trous (3), ledit axe longitudinal (X, Z) étant essentiellement parallèle et espacé par rapport à l'axe longitudinal (Y) dudit élément de fermeture galbé (2).

7. Couvercle (1) selon l'une quelconque des revendications précédentes, **caractérisé en ce que** ledit élément de fermeture galbé (2) est doté d'un ou plusieurs cloisons (13a, 13b, 13c), chacune desquelles est apte à définir une chambre (14) à l'intérieur de laquelle est obtenue une desdites premières portions de labyrinthe.

8. Couvercle (1) selon la revendication 7, **caractérisé en ce qu'**un ou plusieurs desdites cloisons (13b, 13c) est dotée d'un trou passant (8) qui met en communication deux chambres (14) adjacentes entre elles.

9. Couvercle (1) selon les revendications 7 et 8, **caractérisé en ce que** les trous passants (8) desdites cloisons (13b, 13c) mettent deux trous passants (8) appartenant à deux premières portions de labyrinthe adjacentes (6a, 6b, 6c, 6d, 6e, 6f) en communication entre eux.
